# EUROPÄISCHE PATENTANMELDUNG

(11) **EP 2 361 757 A1**
(43) Veröffentlichungstag der Anmeldung: **31.08.2011**
(21) Anmeldenummer: 11001434.7
(22) Anmeldetag: 22.02.2011
(51) Int. Cl.: B29D 30/56

(54) **Laufstreifen zur umfangseitigen Runderneuerung von Reifen**

(30) Priorität: 27.02.2010 DE 202010002913 U
(71) Anmelder: Rösler, Paul jun., 44379 Dortmund (DE)
(72) Erfinder: Rösler, Paul jun., 44379 Dortmund (DE)
(74) Vertreter: Meinke, Jochen

(57) **Zusammenfassung**

Mit einem Laufstreifen zur umfangseitigen Runderneuerung von Reifen, insbesondere von Großreifen, wobei der Laufstreifen außenseitig ein Laufprofil aufweist, soll eine Lösung geschaffen werden, mit dem im umfangseitigen Laufstreifenrandbereich eine besserer Halt an der Karkasse gewährleistet wird.

Dies wird dadurch erreicht, dass der Laufstreifen (3) wenigstens an einem Streifenende in einen stegförmigen Verbindungsbereich (6) übergeht, welcher eine gegenüber dem übrigen Laufstreifen (3) verringerte Materialstärke aufweist und zum Untergreifen eines angrenzenden Laufstreifens (3) oder des anderen Laufstreifenendes ausgebildet ist

## Beschreibung

Die Erfindung betrifft einen Laufstreifen zur umfangseitigen Runderneuerung von Reifen, insbesondere von Großreifen, wobei der Laufstreifen außenseitig ein Laufprofil aufweist.

Im Sinne der Terminologie der Anmeldung wird unter einem Laufstreifen ein Streifen beliebiger Länge verstanden, also auch kürzere, die in der Fachwelt auch als (Laufstreifen-)Segment bezeichnet werden.

Bei der Runderneuerung von Reifen, insbesondere von Großreifen, durch Kaltvulkanisation wird auf den wieder verwendeten Reifengrundkörper (Karkasse) ein neuer, bereits profilierter und vulkanisierter Laufstreifen aufgelegt und aufvulkanisiert. Je nach Reifengröße können auch mehrere umfangseitig aneinander angrenzende Laufstreifen verwendet werden. Dabei muss der Laufstreifen mit der Karkasse eine feste, unlösbare Verbindung eingehen. Zur Herstellung der Verbindung zwischen der Karkasse und dem Laufstreifen wird üblicherweise eine bindende, unvulkanisierte Kautschukmischung (Bindegummi) verwendet und der Reifen nach dem Aufbringen des bzw. der Laufstreifen auf den Reifen in eine Hülle eingebracht. Der Raum zwischen dem Reifen und der Hülle wird dann evakuiert, so dass die Hülle gegen die mit dem bzw. den Laufstreifen versehene(n) Karkasse gepresst wird. Anschließend wird der Reifen in seiner Hülle in einen Autoklaven gegeben, welcher auf 90° bis 130° aufgeheizt und mit einem Druck von 5 bis 8 bar betrieben wird.

In der Praxis hat sich herausgestellt, dass insbesondere bei langer Laufdauer eines runderneuerten Reifens im umfangseitigen Endbereich des Laufstreifens, der an das andere Ende des Laufstreifens oder an einen weiteren Laufstreifen angrenzt, Probleme mit dem sicheren Halt auf der Karkasse auftreten können.

Zur Lösung dieses Problems ist es bei einer Mehrzahl von axial nebeneinander angeordneten Laufstreifen aus GB 744 827 A bekannt, den axialen Randbereich einzelner Laufstreifen mit komplementären zahnartigen Profilierungen zu versehen, so dass axial nebeneinander angeordnete Laufstreifen mit diesen Profilierungen ineinander greifen. Eine solche Lösung hilft jedoch bei Laufstreifen, die umfangseitig aneinander stoßen, nicht weiter.

Aufgabe der Erfindung ist es, einen Laufstreifen für einen Reifen und einen damit hergestellten runderneuten Reifen zu schaffen, der im umfangseitigen Laufstreifenrandbereich einen besseren Halt an der Karkasse gewährleistet.

Diese Aufgabe wird bei einem Laufstreifen der eingangs bezeichneten Art erfindungsgemäß dadurch gelöst, dass der Laufstreifen wenigstens an einem Streifenende in einen stegförmigen Verbindungsbereich übergeht, welcher eine gegenüber dem übrigen Laufstreifen verringerte Materialstärke aufweist und zum Untergreifen eines angrenzenden Laufstreifens oder des anderen Laufstreifenendes ausgebildet ist.

Durch diese Ausgestaltung des Laufstreifens greift der stegförmige Verbindungbereich des Laufstreifens unter den benachbarten Laufstreifen bzw. wenn nur ein Laufstreifen verwendet wird, unter das andere Ende des Laufstreifens, so dass das andere Ende des Laufstreifens bzw. der benachbarte Laufstreifen den stegförmigen Verbindungsbereich beim Abrollen des Reifens einklemmt und dadurch den Laufstreifen zwangsweise in fester Lage auf der Karkasse des Reifens hält. Dies unterstützt die durch die Vulkanisation geschaffene Verbindung des Laufstreifens zum Bindegummi des Reifens und verhindert ein mechanisches Abheben des Laufstreifens an den Verbindungsstellen.

Um eine besonders gute Anlage im Verbindungsbereich der Laufstreifenenden bzw. benachbarter Laufstreifen zu erreichen, ist vorgesehen, dass sich die Materialstärke des stegförmigen Verbindungsbereiches stetig zum freien Ende verringert.

Je nach Dicke des Laufstreifens und des stegförmigen Verbindungsbereiches kann für eine einwandfreie Anlage des Laufstreifens an der Karkasse ferner vorgesehen sein, dass das andere Ende des Laufstreifens eine zum stegförmigen Verbindungsbereich komplementäre Ausnehmung aufweist.

In weiterer vorteilhafter, an sich bekannter Ausgestaltung ist vorgesehen, dass der Laufstreifen im Bereich des Profilgrundes seines Laufprofiles mit Bohrungen versehen ist. Dies führt, wie an sich bekannt, bei der Evakuierung dazu, dass Luft zwischen dem Laufstreifen und dem Bindegummi durch die Bohrungen abgesaugt werden kann, so dass eine einwandfreie Anlage des Laufstreifens mit dem Bindegummi an der Karkasse gewährleistet ist. Diese Bohrungen weisen beispielsweise einen Durchmesser von ca. 10 mm auf und werden durch die anschließende Vulkanisation nach bzw. während der Evakuierung wieder verschlossen.

Die Erfindung betrifft auch einen Reifen, insbesondere einen Großreifen, mit einer Karkasse und mit wenigstens einem umfangseitig an der Karkasse anliegenden Laufstreifen, der in der vorbeschriebenen Weise ausgebildet ist, wobei der stegförmige Verbindungsbereich des Laufstreifens einen angrenzenden Laufstreifen oder das andere Ende des Laufstreifens untergreift.

Dabei ist bei Großreifen bevorzugt vorgesehen, dass an der Karkasse umfangseitig angrenzend zueinander mehrere Laufstreifen vorgesehen sind, wobei der jeweilige stegförmige Verbindungsbereich das andere Ende des angrenzenden Laufstreifens untergreift.

Die Erfindung ist nachstehend anhand der Zeichnung beispielhaft näher erläutert. Diese zeigt in
Fig. 1 eine schematische Darstellung eines mit erfindungsgemäß gestalteten Laufstreifen runderneuerten Großreifens und in
Fig. 2 ein vergrößertes Detail II der Fig. 1.

Ein erfindungsgemäßer runderneuerter Großreifen ist in der Zeichnung allgemein mit 1 bezeichnet. Dieser Großreifen 1 weist eine wieder verwendete Karkasse 2 auf, auf welche umfangseitig aneinander angrenzend beim Ausführungsbeispiel drei Laufstreifen 3 aufvulkanisiert sind. Jeder Laufstreifen 3 weist in üblicher Weise ein nur schematisch angedeutetes Laufprofil mit Profilerhebungen 4 und angrenzendem Profilgrund 5 auf.

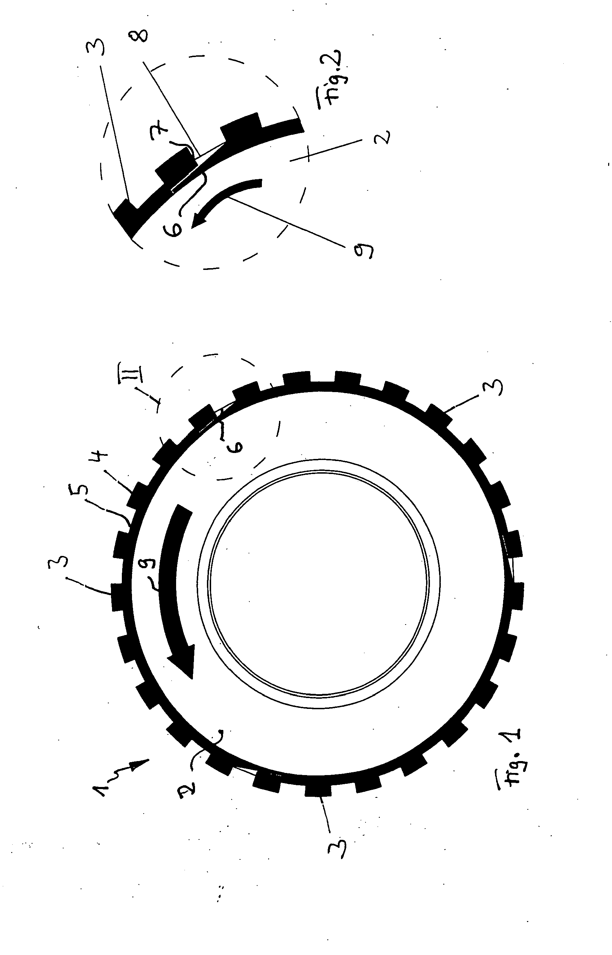

Wesentlich für die Ausgestaltung des jeweiligen Laufstreifens ist nun, wie am besten aus Fig. 2 hervorgeht, dass der jeweilige Laufstreifen 3 an einem Streifenende in einen stegförmigen Verbindungsbereich 6 übergeht, welcher eine gegenüber dem übrigen Laufstreifen verringerte Materialstärke aufweist und zum Untergreifen eines angrenzenden Laufstreifens 3 oder des anderen Laufstreifenendes ausgebildet ist, wenn nur ein Laufstreifen 3 benötigt wird. Dabei ist vorzugsweise das jeweilige andere Ende des Laufstreifens 3 mit einer zum stegförmigen Verbindungsbereich 6 komplementären Ausnehmung 7 versehen. Vorzugsweise verringert sich die Materialstärke des stegförmigen Verbindungsbereiches 6 des jeweiligen Laufstreifens stetig zum freien Ende hin, wie dies der Fig. 2 zu entnehmen ist.

Wie am besten aus Fig. 2 zu erkennen ist, untergreift der stegförmige Verbindungsbereich 6 des einen Laufstreifens 3 (zumindest bereichsweise) das andere Ende bzw. die Ausnehmung 7 des angrenzenden Laufstreifens 3.

Bei der Kaltvulkanisation wird in üblicher Weise zwischen der Karkasse 2 und dem Laufstreifen 3 über der gesamten Breite ein Bindegummi eingesetzt, das je nach Gestaltung des stegförmigen Verbindungsbereiches 6 des jeweiligen Laufstreifens 3 auch radial außenseitig am stegförmigen Verbindungsbereich 6 angeordnet sein kann. Dies ist in Fig. 2 angedeutet, wobei das Bindegummi mit 8 bezeichnet ist. Dieses erstreckt sich auch in den Stoßbereich.

Bei der dargestellten Gestaltung des Großreifens 3 ist wesentlich, dass der Großreifen in der richtigen Laufrichtung montiert wird, die Laufrichtung des Großreifens 1 ist durch einen Pfeil 9 angedeutet. Beim Abrollen des Großreifens 1 klemmt das die Ausnehmung 7 aufweisende hintere Ende des vorderen Laufstreifens 3, den angrenzenden stegförmigen Verbindungsbereich 6 des benachbarten Laufstreifens 3 sozusagen fest an der Karkasse 2 des Großreifens 1, so dass zuverlässig ein sicherer Halt der Laufstreifen 3 auch im Verbindungsbereich über eine lange Standdauer des Reifens gewährleistet ist.

Zusätzlich kann vorgesehen sein, was zeichnerisch nicht dargestellt ist, dass der jeweilige Laufstreifen 3 im Bereich des Profilgrundes 5 mit Bohrungen versehen ist, wie dies an sich bekannt ist. Dies erleichtert den Kaltvulkanisierungsprozess, da bei der Evakuierung etwa zwischen dem Bindegummi und dem Laufstreifen 3 sowie der Karkasse 2 befindliche Luft durch diese Bohrungen abgesaugt werden kann, wodurch eine einwandfreie Anlage der Laufstreifen 3 mit dem Bindegummi an der Karkasse 2 gewährleistet ist.

## Patentansprüche

1. Laufstreifen zur umfangseitigen Runderneuerung von Reifen, insbesondere von Großreifen, wobei der Laufstreifen außenseitig ein Laufprofil aufweist, **dadurch gekennzeichnet,**
**dass** der Laufstreifen (3) wenigstens an einem Streifenende in einen stegförmigen Verbindungsbereich (6) übergeht, welcher eine gegenüber dem übrigen Laufstreifen (3) verringerte Materialstärke aufweist und zum Untergreifen eines angrenzenden Laufstreifens (3) oder des anderen Laufstreifenendes ausgebildet ist.

2. Laufstreifen nach Anspruch 1,
**dadurch gekennzeichnet,**
**dass** sich die Materialstärke des stegförmigen Verbindungsbereiches (6) stetig zum freien Ende verringert.

3. Laufstreifen nach Anspruch 1 oder 2,
**dadurch gekennzeichnet,**
**dass** das andere Ende des Laufstreifens (3) eine zum stegförmigen Verbindungsbereich (6) komplementäre Ausnehmung (7) aufweist.

4. Laufstreifen nach Anspruch 1, 2 oder 3,
**dadurch gekennzeichnet,**
**dass** dieser im Bereich des Profilgrundes (5) seines Laufprofiles mit Bohrungen versehen ist.

5. Reifen, insbesondere Großreifen, mit einer Karkasse (2) und mit wenigstens einem umfangseitig an der Karkasse (2) anliegenden Laufstreifen (3) nach Anspruch 1, 2, 3 oder 4, wobei der stegförmige Verbindungsbereich (6) des Laufstreifens (3) einen angrenzenden Laufstreifen (3) oder das andere Ende des Laufstreifens untergreift.

6. Reifen nach Anspruch 5,
**dadurch gekennzeichnet,**
**dass** an der Karkasse (2) umfangseitig angrenzend zueinander mehrere Laufstreifen (3) vorgesehen sind, wobei der jeweilige stegförmige Verbindungsbereich (6) das andere Ende des angrenzenden Laufstreifens (3) untergreift.
